# EUROPEAN PATENT APPLICATION

(11) **EP 2 645 277 A1**
(43) Date of publication of application: **02.10.2013**
(21) Application number: 13161292.1
(22) Date of filing: 27.03.2013
(51) Int. Cl.: G06F 17/30, G06Q 30/02

(54) **Cloud information trading system and cloud information trading method using the same**

(30) Priority: 27.03.2012 KR 20120030989
(71) Applicant: Samsung Electronics Co., Ltd, Gyeonggi-do 443-742 (KR)
(72) Inventor: Baek, Kun Woo, Gyeonggi-do (KR)
(74) Representative: Walaski, Jan Filip

(57) **Abstract**

A cloud information trading system and an information trading method using the system includes a cloud agent including a cloud storage module to store information provided from a device supporting a cloud service, an information search module to search the stored information, and an information trading module to provide an environment in which the information is traded, an information provision device to acquire information and to provide the cloud agent with the acquired information, and an information reception device to connect to the cloud agent and to download the information through the information trading module.

## Description

The following description relates to an information trading system and an information trading method which uses a cloud computing scheme.

Cloud computing refers to a computing environment in which Information Technology (IT)-related services including storing data and using contents may be integrally used over servers on the Internet.

In the computing environment, information is permanently stored in servers on the Internet and is temporarily stored in clients such as IT devices including a desktop, a tablet computer, a laptop computer, a net book, or a smartphone, for example. Thus, all of the information of users may be stored on servers on the Internet and users may use this information at anytime and anywhere through various types of IT devices.

In other words, the cloud computing technology integrates computer resources at different physical locations using virtualization technologies, by which users utilize computing resources, such as hardware and software in an intangible form like a cloud, and pay for it.

The cloud computing technology, which integrally provides IT-related services including data storage, data processing, network usage, content usage over servers on the Internet represented as cloud, is also defined as "a customized outsourcing services of IT resources using the Internet."

By introducing cloud computing, companies and individuals may reduce a cost for maintaining computer systems, cost for purchasing and installing servers, cost for updates, cost for purchasing software, and time and manpower, and may save energy.

In addition, whereas data stored in PCs may be lost due to hardware problems, in the cloud computing environment, data may be safely stored in external servers, spatial limitations on storage may be overcome, and users may access and modify documents they have worked on anytime and anywhere.

When natural disasters, automobile accidents, illegal acts, law manipulation, or crimes occur, reports and notification thereof totally depend on the information individuals have stored, if social infrastructure like CCTVs are unable to cover those.

Currently, when the information individuals have stored is requested, there is almost no method to easily obtain the information in real-time or as soon as possible.

Even if a person coincidently acquires information, he may not be aware of it. Even if he is aware of it, he may not know how to report the acquisition of the information or notify the proper authorities. Even if he knows how to report the information, he may not report the information because the procedures to report or notify are too complicated. In addition, many people hesitate to report information, as they wish to remain anonymous.

Under these circumstances, a method to easily acquire information through IT technologies without spatial or temporal limitation is required.

Therefore, it is an aspect of the present invention to provide a cloud information trading system in which information may be traded using a cloud service, and a method using the system.

Additional aspects of the disclosure will be set forth in part in the description which follows and, in part, will be obvious from the description, or may be learned by practice of the invention.

In accordance with an aspect of the present disclosure, a cloud information trading system includes a cloud agent including a cloud storage module to store information provided from a device supporting a cloud service, an information search module to search the stored information, and an information trading module to provide an environment in which the information is traded, an information provision device to acquire information and to provide the cloud agent with the acquired information, and an information reception device to connect to the cloud agent and to download the information through the information trading module.

The information provision device may include an information acquisition module to acquire information, and a local storage module to store the acquired information, and the information acquisition module may include an image capturing module and a recording module.

The information reception device may include a local storage module to store the downloaded information, and an information reproduction module to reproduce the downloaded information as appropriate for its nature.

The cloud agent may include a database module to store information about the cloud service subscribers registered with the cloud agent, and the information about the cloud service subscribers may include bank account information for depositing a payment for a trade of information.

The information provision device may transmit the acquired information to the cloud agent along with additional information including at least one of a time and a location that the information was acquired, the cloud agent may store the information in the cloud storage module, and the information search module may search for information based on the additional information when an information search command is input from the information reception device.

The information search module may search information stored in the cloud storage module of the cloud agent and information stored in social infrastructure registered with the cloud agent based on the additional information when the information search command is input from the information reception device, and the social infrastructure may include a CCTV.

The information search module, when information corresponding to the information search command input from the information reception device is found, may extract and process a portion by which the information is identifiable from the found information to transmit it to the information reception device for a preview, and transmit a message inquiring whether to trade the information provided as the preview to the information reception device; and the information reception device may display the processed information for the preview, and display a message inquiring whether to trade the information provided as the preview.

The information search module, when there is no information corresponding to the information search command input from the information reception device, may transmit to the information reception device a message indicating that there is no information corresponding to the information search command, and a message inquiring whether to additionally search local storage modules of the devices supporting the cloud service registered with the cloud agent, and, upon receiving a request to additionally search from the information reception device, transmit information search commands to the devices supporting the cloud service registered with the cloud agent.

Each of the devices supporting the cloud service may include respective information provision devices, search the respective local storage module to store information upon receiving the information search commands, and transmit the information to the cloud agent if information corresponding to the information search command is present.

The information trading module may search for the information provision device having provided information to be traded, and transmit an information trade request to the found information provision device upon receiving the information trade request from the information reception device.

The information trading module, upon receiving a message indicating that the trade of information is agreed from the information provision device, may transmit the message to the information reception devices, remit a payment for the trade to an account of the user of the information provision device when the payment of the trade is received from the information reception device, and transmits the information to be traded to the information reception devices. A service fee may have been subtracted from the payment.

The information trading module may list a list of organizations to report or notify registered with the cloud agent or activates search function for the organizations to report or notify when a report or notification request is transmitted from the information provision device, and transmit information to a selected organization upon selection.

The information trading module, when an organization to report or notify is selected, may search the cloud storage module for the information to be reported or notified, if information is found, to transmit the found information to the organization to report or notify, request a transmission of the information to be reported or notified to the local storage modules of the information provision devices if the information to be reported or notified is not in the cloud storage module, and, upon receiving the information to be reported or notified from the information provision device, transmit the received information to the organization to report of notify.

In accordance with an aspect of the present disclosure, an information trading method, which uses a cloud information trading system including a cloud agent including a cloud storage module to store information provided from a cloud service supporting device, an information search module to search the stored information, and an information trading module to provide an environment in which the information is traded, an information provision device to acquire information and to provide the cloud agent with the acquired information, and an information reception device to connect to the cloud agent and to download the information through the information trading module, includes searching for, by the information search module, information corresponding to an information search command, when the information search command is input from the information reception device, transmitting, by the information trading module, a message inquiring whether to trade the information to the information reception device, when information corresponding to the information search command is found, and transmitting a request to trade the information from the information trading module to the information provision device having provided the information to be traded, when the request to trade the information is received from the information reception device.

The method may include acquiring information from the information provision device, transmitting the acquired information from the information provision device to the cloud agent along with additional information including at least one of a time and a location that the information was acquired, and storing the transmitted information in the cloud storage module of the cloud agent.

The searching may include searching, by the information search module, information stored in the cloud storage of the cloud agent and information stored in social infrastructure registered with the cloud agent based on at least one of the time and the location that the information was acquired, when the information search command is input from the information reception device, transmitting a message indicating that there is no information corresponding to the information search command and a message inquiring whether to perform additional search on local storage modules of the devices supporting the cloud service registered with the cloud agent to the information reception device, if information corresponding to the information search command input from the information reception device is not found, transmitting the information search command to the devices supporting the cloud service registered with the cloud agent, if a request to additional search is received from the information reception device, searching the local storage modules storing information, when the devices supporting the cloud service receives the information search command, and transmitting the information to the cloud agent if there is information corresponding to the information search command.

The transmitting the message may include extracting and processing a portion by which the information is identifiable from the found information to transmit the portion to the information reception device for a preview if information corresponding to the information search command is found, and transmitting a message inquiring whether to trade the information provided as the preview to the information reception device.

The transmitting the request may include searching, by the information trading module, the information provision device having provided the information to be traded when the information trade request is received from the information reception device, and transmitting the request to trade the information to the found information provision device if the information provision device having provided the information to be traded is found.

The method may further include transmitting a message indicating that the trade of the information is agreed from the information trading module to the information reception device when the message is received from the information provision device, remitting a payment for the trade from the information trading module to an account of a user of the information provision device when the payment is received from the information reception device, in which a service fee has been subtracted from the payment, and transmitting the information to be traded to the information reception device when the payment is remitted, and notifying the information reception device that the payment is sent to the information reception device.

In accordance with an aspect of the present disclosure, a method to facilitate sharing of media between a media provider and a media consumer includes uploading the media, with identifying information including at least one of a time and a location associated with the media, from the media provider to a cloud agent; searching for the uploaded media in the cloud agent based on the identifying information; returning a preview of media that matches the searched identifying information; establishing an exchange of payment for the matching media between the media provider and the media consumer; and downloading, from the cloud agent, the media for which payment was exchanged.

The method may further include sending, by the cloud agent, a request to the media provider to search, based on the identifying information, for media stored in the media provider that has not been uploaded to the cloud agent.

The media provider may include a device of a private individual.

The media provider may include an anonymous provider.

These and/or other aspects of the invention will become apparent and more readily appreciated from the following description of the embodiments, taken in conjunction with the accompanying drawings of which:
FIG. 1 is a diagram conceptually illustrating a cloud information trading system according to an embodiment of the present disclosure;
FIG. 2 is a block diagram illustrating a configuration of a cloud information trading system according to the embodiment of the present disclosure;
FIG. 3 is a flowchart illustrating information acquisition and storage operations of an information trading method using the cloud information trading system according to the embodiment of the present disclosure;
FIG. 4 is a flowchart illustrating an information report operation of the information trading method using the cloud information trading system according to the embodiment of the present disclosure;
FIG. 5 is a flowchart illustrating an information search operation of the information trading method using the cloud information trading system according to the embodiment of the present disclosure; and
FIG. 6 is a flowchart illustrating an information trade payment of the information trading method using the cloud information trading system according to the embodiment of the present disclosure.

Reference will now be made in detail to the embodiments of the present disclosure, examples of which are illustrated in the accompanying drawings, wherein like reference numerals refer to like elements throughout.

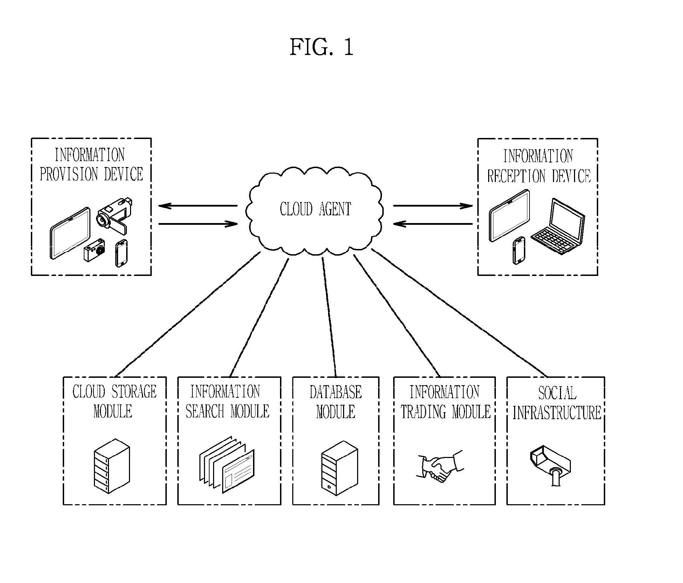

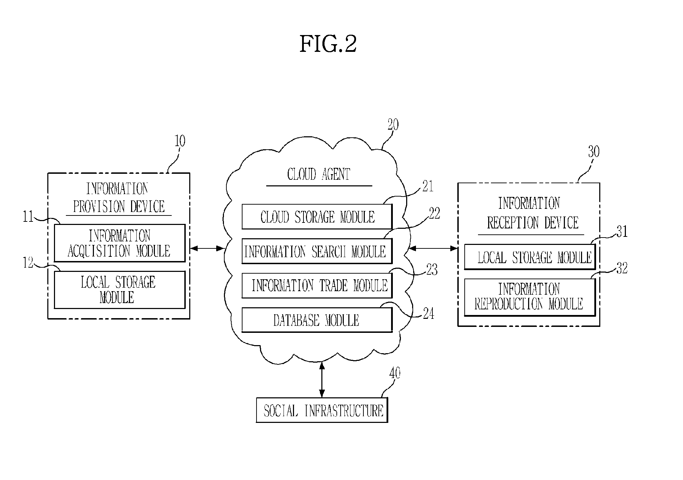

FIG. 1 conceptually illustrates a cloud information trading system according to an embodiment of the present disclosure while FIG. 2 illustrates a configuration of the cloud information trading system according to the embodiment of the present disclosure.

The cloud information trading system according to the embodiment of the present disclosure includes an information provision device 10, an information reception device 30, and a cloud agent 20.

The information provision device 10 includes an information acquisition module 11 to acquire information by performing functions such as image capture or recording video recording audio, for example, and a local storage module 12 to store the information acquired by the information acquisition module 11.

The information provision device 10 may include a smartphone, a tablet computer, a digital camera, a camcorder, or a black box for a vehicle, for example.

The information provision device 10 may include a cloud-support device which may be directly connected to the cloud agent 20 through a network, such as a smartphone or a tablet computer with a network communication capability, as well as a non cloud-support device which does not have a network communication capability but may be indirectly connected to the cloud agent 20 by being connected to a device with a network communication capability.

For example, devices without a network communication capability, such as a digital camera, a camcorder, or a black box for a vehicle, may be connected to a device with a network communication capability, such as a computer, which may be connected to the cloud agent 20.

A user of the information provision device 10 may directly transmit and store the information acquired through the information acquisition module 11 to and in the cloud agent 20, or may store the information in the storage module 11 of information provision device 10 and then transmit the stored information to the cloud agent 20 upon selection, depending on a cloud connection setting.

The information acquired by the information acquisition module 11 includes additional information such as a location and a time the information was acquired, in addition to the information itself (such as an image or a video, for example). Such location and time information may be used as a tag to identify information in a later search process.

The information reception device 30 connects to the cloud agent 20 and downloads requested information from the cloud agent 20, and may be a cloud support device which is directly connectable to the cloud agent 20 with a network communication capability.

Further, the information reception device 30 includes an information reproduction module 32 to reproduce information downloaded from the cloud agent 20 as appropriate for the nature of the information, and a local storage module 31 to store the downloaded information. The information reproduction module 32 may include a program or an application to play video or audio files, or view image files, for example.

The information reception device 30 may include a portable smartphone and tablet computer, or an ordinary PC or a laptop computer.

Because smartphones and tablet PCs may have both of the capability to provide information to the cloud agent 20 and the capability to receive information from the cloud agent 20, they may be either of the information provision device 10 and the information reception device 30.

However, the information provision device 10 may be different from the information reception device 30 in that the former includes the information acquisition module 11 for acquiring information even though it may not support a network communication capability, while the latter may support a network communication capability even though it may not include the information acquisition module 11 for acquiring information.

Users of the information reception device 30 may be an individual, an organization, or a medium which require certain information. The users of the information reception device 30 may connect to the cloud agent 20 via the information reception device 30 for acquiring requested information, search for requested information through the cloud agent 20, and download the information from the cloud agent 20 if the requested information is found.

The cloud agent 20 includes a cloud storage module 21 to store information transmitted from a device supporting cloud, a database module 24 to store information about service subscribers who are registered with the cloud agent 20 and use a cloud service and to manage accounts of the subscribers, an information search module 22 to provide a capability to search information stored in the cloud, and an information trading module 23 to provide an environment for information trade between the information provision device 10 and the information reception device 30.

The cloud storage module 21 may be a server to store information transmitted from a cloud support device.

The cloud storage module 21 stores information transmitted from devices registered with service subscribers in allocated spaces to accounts of the service subscribers who are registered with the cloud agent 20 and who use services.

The database module 24 stores subscription information about the subscribers who use the cloud service, and manages accounts created at the time of subscription.

The database module 24 may store information about devices of the subscribers, and information about an account of the subscribers, such as a bank account, for example.

The account information may be registered and stored upon selection of a subscriber at the time of subscription, in order for a purchaser of information to pay for the information trade. However, other methods of payment appreciated by those skilled in the art may be used.

The subscriber may be a private individual or a group. A group may be subscribed under the name of a representative or a corporation, for example.

The information search module 22 provides a search capability for a service subscriber to find out requested information from the information stored in the storage module 21 of the cloud agent 20.

The service subscriber may search for requested information through an input such as a time and a location that information was acquired, or key words, for example. Additionally other search methods appreciated by those skilled in the art may be used.

For example, the location that information was acquired may include the name of a city, the name of a region, the name of an administrative district, the name of a street, or coordinate information. The time may include a specific time of day, a period of time including multiple days, weeks, months, or years, or general times of day, such as morning or evening, for example. That is, a victim of a hit-and-run accident may input the time and location that the accident happened so that a video or image showing the scene may be located in the cloud agent 20.

The information trading module 23 provides a trade service of the information stored in the cloud agent 20.

That is, if a user finds requested information through the information search module 22, the information trading module 23 may request a trade for the found information to an information provider who uploaded the information to the cloud agent 20. If the information provider accepts the trade, an information trade acceptance message is delivered to the user so that an environment in which information may be traded is provided.

The payment of the information trade is not directly made between the information provider and the trade requester but is sent to the account of the information provider registered at the time of subscription through the information trading module 23.

Because the payment of the information trade is made through the information trading module 23, anonymity is guaranteed, and thus the trade is safer.

The method to trade information will be described in detail with reference to the flowcharts.

The cloud agent 20 may also store information acquired through previously established social infrastructure 40. For example, information acquired through CCTVs installed throughout cities may be stored in the cloud agent 20. Operators of CCTVs may also subscribe to the cloud service and receive payment for information trades.

The information acquired through the social infrastructure may be stored not in the cloud agent 20 but in a local storage of the social infrastructure 40. Although not stored in the cloud agent 20, the information stored in the local storage of the social infrastructure may be searched when the information in the cloud agent 20 is searched.

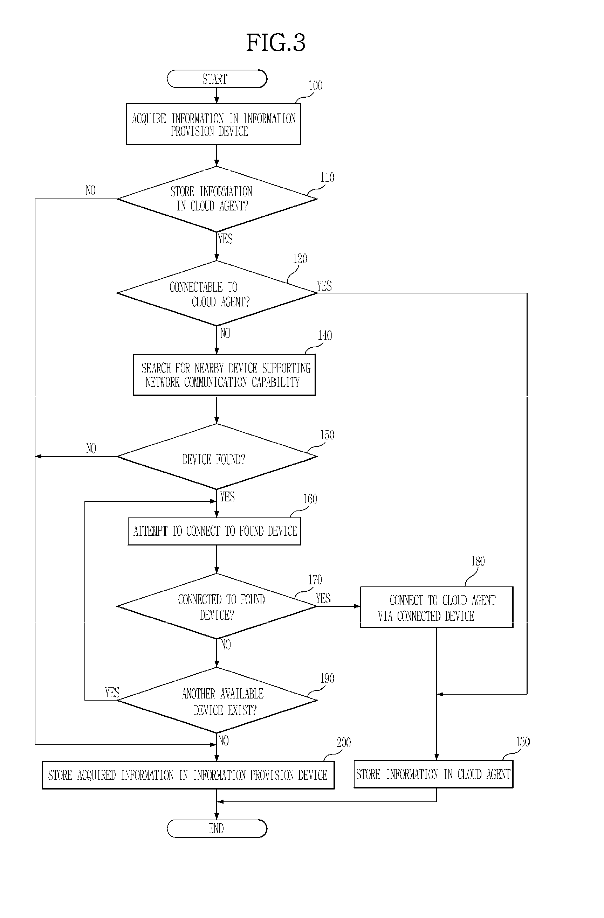

FIG. 3 is a flowchart illustrating information acquisition and storage operations of an information trading method using the cloud information trading system according to the embodiment of the present disclosure.

Referring to FIG. 3, the information provision device 10 acquires information (operation 100).

As described above, the information provision device 10 includes the information acquisition module 11 to acquire information by performing functions such as image capture, recording video recording audio, etc., and a local storage module 12 to store the information acquired by the information acquisition module 11.

A user of the information provision device 10 acquires information by taking pictures or recording sounds using the information provision device 10.

Upon acquiring information, the information provision device 10 confirms whether a user wants the information to be stored in the cloud agent 20 (operation 110).

Prior to storing information in the local storage module 12 of the information provision device 10, it is confirmed that whether the information is to be delivered to and stored in the cloud storage module 21 of the cloud agent 20. The above process may be omitted if it is determined that the acquired information is to be delivered directly to and stored in the cloud agent 20.

In the case that the information is not stored in the cloud agent 20, it is stored in the local storage module 12.

If it is selected to store the information in the cloud agent 20, information provision device 10 determines whether a connection to the cloud agent 20 may be made (operation 120).

If so, the information provision device 10 connects to the cloud agent 20 and uploads the acquired information to the cloud storage module 21 of the cloud agent 20.

It not, the information provision device 10 searches whether a device to support a network communication capability is nearby (operation 140).

For example, if a smartphone or a tablet computer is located in a shadow region so as not to be able to connect to a communication network or use Wi-Fi, it may not be able to connect to the cloud agent 20.

In this case, a device registered with the database of the information provision device 10 or a device (e.g., another smartphone, tablet computer) supporting a network communication nearby the information provision device 10 are searched for. In addition, a device that is connectable via Bluetooth or near field communication (NFC) may be searched for.

If no device is found (operation 150), the acquired information is stored in the local storage module 12 of the information provision device 10.

If a device is found, an attempt is made to connect to the device (operation 160).

If connection to the found device is successful (operation 170), the information provision device 10 connects to the cloud agent 20 using the found device as if it was a modem (operation 180), and uploads the acquired information to the cloud storage module 21 of the cloud agent 20 (operation 130).

If no connection is made to the found device, it is determined whether another available device is present (operation 190).

If there is no available device, the acquired information is stored in the local storage module 12 of the information provision device 10 (operation 200).

Thus far, an example of an information provision device 10 to support a network communication capability has been described. For an information provision device 10 which does not support a network communication capability, it is first connected to another device which may use the Internet, such as a computer, then performs the information storing flow according to the flowchart of FIG. 3.

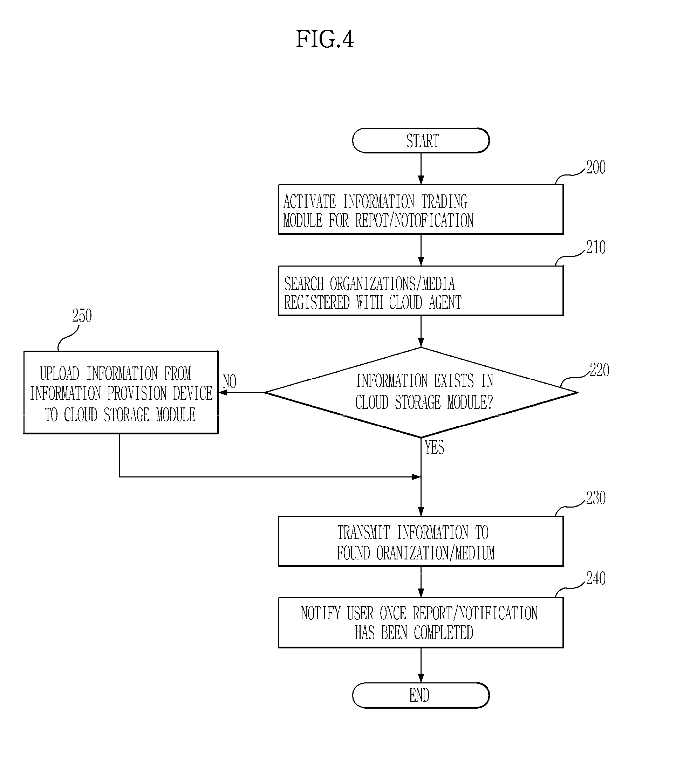

FIG. 4 is a flowchart illustrating an information report operation of the information trading method through the cloud information trading system according to the embodiment of the present disclosure.

The information report operation illustrated in FIG. 4 is applied when a user who has acquired information wishes to notify or report an incident or accident through the information.

When the user merely wants to store the information in the cloud agent 20, the information is stored in the cloud agent 20 according to the processes of FIG. 3 and the processes in FIG. 4 are omitted.

When a user acquires information through the information provision device 10 and wants to notify the information or report an incident through the information, the user activates the information trading module 23 of the cloud agent 20 for notification or report (operation 200).

For example, the user may select a report/notification tab for report or notification of the information, and thereby activate the information trading module 23 providing an information trade function for report or notification.

Here, the report/notification tab is merely an implementation example, and the information trading module 23 may be activated for report or notification by reflecting requirements of users' reports or notification in various ways.

When the information trading module 23 is activated for report or notification, the information trading module 23 provides a user with a search environment for various organizations or media registered with the cloud agent 20 so that the user may search for an organization to provide the information to (operation 210). Here, the organizations may be a public institution such as the National Police Agency and the media may be various newspaper/broadcast media.

When the organization or medium the user wants is found, the cloud agent 20 searches the cloud storage module 21 of the cloud agent 20 for the information (operation 220). This process may be omitted in the case that a user wants to report or notify information after uploading the information to the cloud agent 20. However, this process may be performed for reconfirmation.

If the information is stored in the cloud storage module 21 of the cloud agent 20, the cloud agent 20 transmits the information to the found organization or medium (operation 230), and notifies the user once the report or notification of the information has been completed. (operation 240).

If the information is not stored in the cloud storage module 21 of the cloud agent 20, the information provision device 10 uploads the information to the cloud storage module 21 of the cloud agent 20 (operation 250), and, when the information is uploaded, the cloud agent 20 transmits the information to the found organization or medium (operation 230), and also notifies the user once the report or notification of the information has been completed (operation 240). In order to guarantee anonymity of the user, the information may be transmitted through the cloud agent 20, rather than being directly transmitted from the information provision device 10.

Upon receiving a trade request from a subject who wants a trade of the information, the information trading module 23 engages the trade requester and the information provider so that the trade is made. As described above, upon being activated by a report or notification, the information trading module 23 provides a search environment for the target of the report or notification so that the report or notification of the information may be easily made without complicated procedures.

The above-described method of reporting or notifying information using the cloud agent 20 may attract more reports or notifications by improving existing complicated procedures of reporting and notifying information and anonymity guarantee.

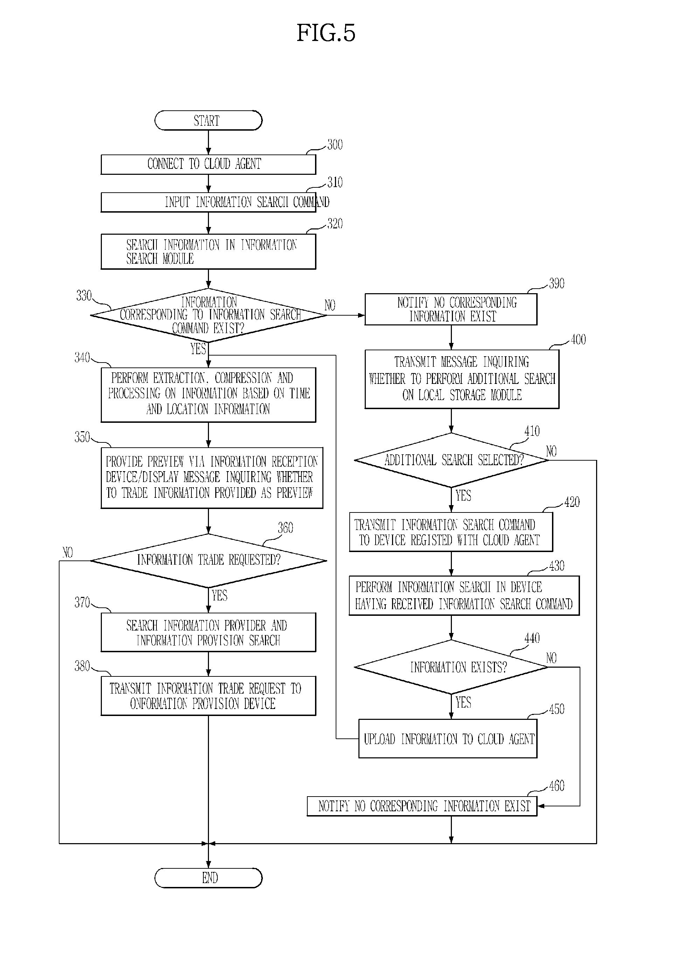

FIG. 5 is a flowchart illustrating an information search operation of the information trading method through the cloud information trading system according to the embodiment of the present disclosure.

A user who wants to trade information connects to the information reception device 30 through the information reception device 30 (operation 300) and enters information to search for desired information (operation 310).

The user who searches information through the information reception device 30 may search for information related to a specific incident or phenomenon that happened at a specific location and time, by inputting a location and time. Alternatively, the user may search by inputting key words related to the information he wants.

The above search method is merely an example, and information may be searched in a manner similar to general search engines.

Upon receiving an information search command, the information search module 22 of the cloud agent 20 searches information stored in the cloud storage module 21 of the cloud agent 20 according to the input command (operation 320).

The information search module 22 may also search information in the social infrastructure 40 connected to the cloud agent 20, as well as information in the cloud storage module 21 of the cloud agent 20.

Unlike a personal terminal, because the social infrastructure 40, which is for public use, does not require much anonymity, the search may be performed together when the information stored in the cloud storage module 21 of the cloud agent 20 is searched.

If information corresponding to the input search command is found (operation 330), the information search module 22 performs extraction, compression, and processing on the information based on the time and location information (operation 340).

Upon completion of the processing of the information, the information search module 22 provides a user with a preview through the information reception device 30, and displays a message inquiring whether the user wants to trade the previewed information (operation 350).

The preview may be provided as a thumbnail when the information is an image or a video, and may be provided as a pre-listening when the information is an audio file. However, the embodiment of the present disclosure is not limited thereto but may be embodied in various known ways.

By providing such a preview, the information search module 22 allows a user to determine whether the found information is what he wants.

If a user wants to trade the information provided through the preview (operation 360), the information trading module 23 searches the database module 24 for the information provider and the information provision device 10 that uploaded the information to the cloud agent 20 (operation 370).

If the information provider is found, the information trading module 23 transmits a message to request the trade of the information to the device of the information provider registered with the cloud agent 20 (operation 380).

If information corresponding to the input command is not found (operation 330), the information search module 22 notifies the user that there is no corresponding information (operation 390).

Then, the information search module 22 transmits to the user who wants to trade the information a message to inquiry whether to additionally search the information stored in local storage modules 12 of the devices of the users registered with the cloud agent 20 (operation 400).

Unlike information stored in the social infrastructure 40, it is important to guarantee anonymity of the information provider of information stored in the local storage module 12. Therefore, information in the local storage module 12 is not searched when information stored in the cloud storage module 21 of the cloud agent 20 but is additionally searched only when the purchaser of the information wants.

If it is selected to additionally search the local storage modules 12 (operation 410), the information search module 22 transmits an information search command to at least one of the devices registered with the cloud agent 20 (operation 420).

Upon receiving the information search command, the device or devices search information stored in respective local storage modules 12 according to the command (operation 430).

If a device which received the command is in use, the information search may be performed in background. Furthermore, if a user indicates that he does not want his device to be searched according to the command, the information search may not be performed.

If information is found as a search result (operation 440), the device or devices upload the information to the cloud agent 20 (operation 450).

When the information is uploaded to the cloud agent 20, the information search module 22 of the cloud agent 20 performs extraction, compression, and processing on the information based on the time and location information, as described above. Such processing of the information may be performed in each of the devices or may be performed in the cloud agent 20.

If information is not found (operation 440), the information search module 22 notifies the user who wants to trade the information that there is no corresponding information, and completes the search (operation 460).

The process of searching information stored in the local storage module 12 in the information search processes illustrated in FIG. 5 has been described on the assumption that the device having the local storage module 12 supports a network communication capability.

In the case that the device having the local storage module 12 does not support a network communication capability, when the device is connected to a terminal with a network communication capability, it is determined whether there is a information search command for the local storage module 12 received from the cloud agent 20. If there is an information search command, the above-described information search processes are performed.

If information is found, instead of immediately uploading the information to the cloud agent 20, the search result is first delivered to a user who wants to trade the information, and then upload the information to the cloud agent 20 if the user requests to check the information.

Compared to the case that information is stored in a device supporting a cloud service, in the case that the information is stored in a device not supporting a cloud service, it is likely that the information is more personal or is not to be revealed. Therefore, the above process may be performed for enhanced anonymity guarantee.

Accordingly, if the user of the device accepts the information search request transmitted from the user who wants to purchase information, the information is uploaded to the cloud agent 20. Processes after the information is uploaded to the cloud agent 20 are identical to those illustrated in FIG. 5.

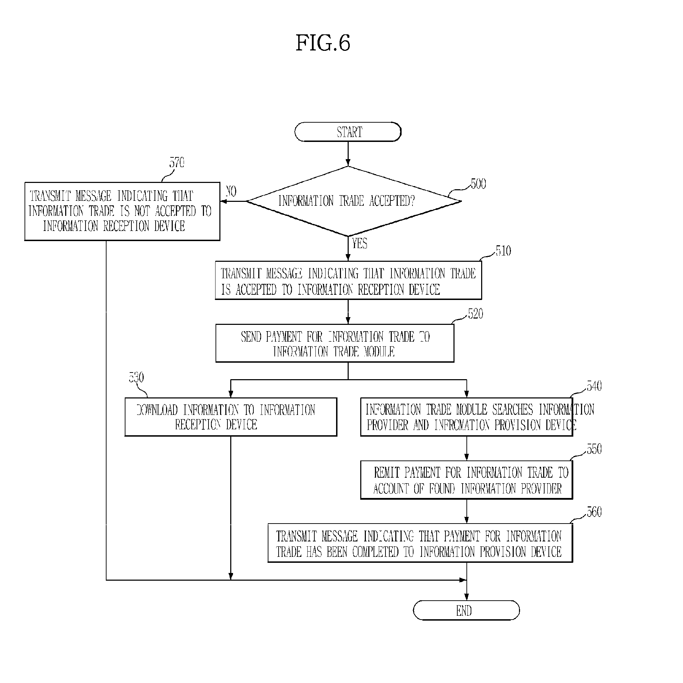

FIG. 6 is a flowchart illustrating an information trade payment of the information trading method through the cloud information trading system according to the embodiment of the present disclosure.

When a message to request trade information is transmitted to a device of an information provider registered with the cloud agent 20, and the information provider accepts it (operation 500), the information trading module 23 transmits a message indicating that the information provider has accepted the trade of the information to the information reception device 30 (operation 510).

If the information provider does not accept the trade of the information (operation 500), the information trading module 23 transmits a message indicating that the information provider did not accept the trade of the information to the information reception device 30 (operation 570).

When the message indicating that the information provider has accepted the trade of the information is received, a payment for the trade is delivered to the information trading module 23 of the cloud agent 20 (operation 520).

That is, upon receiving the message indicating that the information provider has accepted the trade of the information, the user who requested the trade pays for the trade. As a payment service, various known payment services made on a network may be used.

For example, the payment for the trade may be made by a credit card, a bank account transfer, or a mobile payment.

When the payment for the trade is delivered to the information trading module 23, the information trading module 23 transmits the information to the information reception device 30 such that the information reception device 30 may download the information (operation 530). Further, the information trading module 23 notifies the information reception device 30 once the payment for the trade has been made successfully.

In addition, after the payment for the trade is delivered to the information trading module 23, the information trading module 23 of the cloud agent 20 searches the database module 24 for the information provider who uploaded the information to the cloud agent 20 and the information provision device 10 (operation 540).

When the information provider and the information provision device 10 is found, the information trading module 23 remits the payment for the trade to the account registered at the time of subscription (operation 550).

The actual amount of the payment may equal to the amount that subtracted certain fees for the cloud service from the amount the trade requester has paid.

When the payment for the trade has been deposited in the account of the information provider, the information trading module 23 notifies the device of the information provider once the payment of the trade has been completed (operation 560).

As is apparent from the above description, according to the embodiment of the present disclosure, an information provider may gain monetary profit and an information trade requester may easily acquire desired information.

Further, a cloud information trading system may gain monetary profit from commissions for information trade and service fees.

Further, by facilitating provision and utilization of information, the embodiment of the present disclosure may contribute to prevention and settlement of crimes, incidents and accidents, and thereby promoting the public interest.

The above-described embodiments may be recorded in computer-readable media including program instructions to implement various operations embodied by a computer. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA), which executes (processes like a processor) program instructions. Examples of program instructions include both machine code, such as produced by a compiler, and files containing higher level code that may be executed by the computer using an interpreter. The above-described devices may be configured to act as one or more software modules in order to perform the operations of the above-described embodiments, or vice versa.

Although a few embodiments of the present invention have been shown and described, it would be appreciated by those skilled in the art that changes may be made in these embodiments without departing from the principles of the invention, the scope of which is defined in the claims.

## Claims

1. A cloud information trading system comprising:
a cloud agent comprising a cloud storage module to store information provided from a device supporting a cloud service, an information search module to search the stored information, and an information trading module to provide an environment in which the information is traded;
an information provision device to acquire information and to provide the cloud agent with the acquired information; and
an information reception device to connect to the cloud agent and to download the information through the information trading module.

2. The system according to claim 1, wherein the information provision device comprises an information acquisition module to acquire information, and a local storage module to store the acquired information, and wherein the information acquisition module comprises an image capturing module and a recording module.

3. The system according to claim 1 or 2, wherein the information reception device comprises a local storage module to store the downloaded information, and an information reproduction module to reproduce the downloaded information.

4. The system according to claim 1, 2 or 3, wherein the cloud agent comprises a database module to store information about the cloud service subscribers registered with the cloud agent, wherein the information about the cloud service subscribers comprises account information for depositing a payment for a trade of information.

5. The system according to any one of the preceding claims, wherein:
the information provision device transmits the acquired information to the cloud agent along with additional information comprising at least one of a time and a location that the information was acquired;
the cloud agent stores the information in the cloud storage module; and
the information search module searches for information based on the additional information when an information search command is input from the information reception device.

6. The system according to claim 5, wherein the information search module searches information stored in the cloud storage module of the cloud agent and information stored in social infrastructure registered with the cloud agent based on the additional information when the information search command is input from the information reception device, wherein the social infrastructure comprises a closed-circuit television (CCTV).

7. The system according to any one of the preceding claims, wherein:
the information search module, when information corresponding to the information search command input from the information reception device is found, extracts and processes a portion by which the information is identifiable from the found information to transmit it to the information reception device for a preview, and transmits a message inquiring whether to trade the information provided as the preview to the information reception device; and
the information reception device displays the processed information for the preview, and displays a message inquiring whether to trade the information provided as the preview,
or
wherein the information search module, when there is no information corresponding to the information search command input from the information reception device, transmits to the information reception device a message indicating that there is no information corresponding to the information search command, and a message inquiring whether to additionally search local storage modules of the devices supporting the cloud service registered with the cloud agent, and, upon receiving a request to additionally search from the information reception device, transmits information search commands to the devices supporting the cloud service registered with the cloud agent.

8. The system according to claim 7, wherein each of the devices supporting the cloud service comprises respective information provision devices, searches the respective local storage module to store information upon receiving the information search commands, and transmits the information to the cloud agent if information corresponding to the information search command is present.

9. The system according to any one of the preceding claims, wherein the information trading module searches for the information provision device having provided information to be traded, and transmits an information trade request to the found information provision device upon receiving the information trade request from the information reception device.

10. The system according to claim 9, wherein the information trading module, upon receiving a message indicating that the trade of information is agreed from the information provision device, transmits the message to the information reception devices, remits a payment for the trade to an account of the user of the information provision device when the payment of the trade is received from the information reception device, and transmits the information to be traded to the information reception devices, wherein a service fee has been subtracted from the payment.

11. The system according to any one of the preceding claims, wherein the information trading module lists a list of organizations to report or notify registered with the cloud agent or activates search function for the organizations to report or notify when a report or notification request is transmitted from the information provision device, and transmits information to a selected organization upon selection and/or
wherein the information trading module, when an organization to report or notify is selected, searches the cloud storage module for the information to be reported or notified, if information is found, to transmit the found information to the organization to report or notify, requests a transmission of the information to be reported or notified to the local storage modules of the information provision devices if the information to be reported or notified is not in the cloud storage module, and, upon receiving the information to be reported or notified from the information provision device, transmits the received information to the organization to report or notify.

12. An information trading method using a cloud information trading system comprising a cloud agent comprising a cloud storage module to store information provided from a cloud service supporting device, an information search module to search the stored information, and an information trading module to provide an environment in which the information is traded, an information provision device to acquire information and to provide the cloud agent with the acquired information, and an information reception device to connect to the cloud agent and to download the information through the information trading module, the method comprising:
searching for, by the information search module, information corresponding to an information search command, when the information search command is input from the information reception device;
transmitting, by the information trading module, a message inquiring whether to trade the information to the information reception device, when information corresponding to the information search command is found; and
transmitting a request to trade the information from the information trading module to the information provision device having provided the information to be traded, when the request to trade the information is received from the information reception device.

13. The method according to claim 12, the method comprising:
acquiring information from the information provision device;
transmitting the acquired information from the information provision device to the cloud agent along with additional information comprising at least one of a time and a location that the information was acquired; and
storing the transmitted information in the cloud storage module of the cloud agent
and/or wherein the searching comprises:
searching, by the information search module, information stored in the cloud storage of the cloud agent and information stored in social infrastructure registered with the cloud agent based on at least one of the time and the location that the information was acquired, when the information search command is input from the information reception device;
transmitting a message indicating that there is no information corresponding to the information search command and a message inquiring whether to perform additional search on local storage modules of the devices supporting the cloud service registered with the cloud agent to the information reception device, if information corresponding to the information search command input from the information reception device is not found;
transmitting the information search command to the devices supporting the cloud service registered with the cloud agent, if a request to additional search is received from the information reception device;
searching the local storage modules storing information, when the devices supporting the cloud service receives the information search command; and
transmitting the information to the cloud agent if there is information corresponding to the information search command.

14. The method according to claim 12, wherein the transmitting the message comprises:
extracting and processing a portion by which the information is identifiable from the found information to transmit the portion to the information reception device for a preview if information corresponding to the information search command is found; and
transmitting a message inquiring whether to trade the information provided as the preview to the information reception device
and/or
wherein the transmitting the request comprises:
searching, by the information trading module, the information provision device having provided the information to be traded when the information trade request is received from the information reception device; and
transmitting the request to trade the information to the found information provision device if the information provision device having provided the information to be traded is found;
and/or
further comprising:
transmitting a message indicating that the trade of the information is agreed from the information trading module to the information reception device when the message is received from the information provision device;
remitting a payment for the trade from the information trading module to an account of a user of the information provision device when the payment is received from the information reception device, wherein a service fee has been subtracted from the payment; and
transmitting the information to be traded to the information reception device when the payment is remitted, and notifying the information reception device that the payment is sent to the information reception device.

15. A computer program, which when executed by a processor, is arranged to perform a method according to any one of claims 12 to 14.
